# EUROPÄISCHE PATENTSCHRIFT

(11) **EP 0 414 011 B1**
(45) Veröffentlichungstag und Bekanntmachung des Hinweises auf die Patenterteilung: **12.01.1994**
(21) Anmeldenummer: 90114927.8
(22) Anmeldetag: 03.08.1990
(51) Int. Cl.: A23L 1/308, A23L 2/26, A23L 2/38

(54) **Mit Ballaststoffen angereicherte flüssige Nahrungsmittel und Verfahren zur Herstellung derselben**
Liquid food enriched with ballast material and process for preparing it
Aliment liquide enrichi en matières de lest et procédé pour le préparer

(30) Priorität: 24.08.1989 DE 3927962
(43) Veröffentlichungstag der Anmeldung: 27.02.1991
(73) Patentinhaber: Döhler GmbH, D-64295 Darmstadt (DE)
(72) Erfinder: Hauke, Franz, D-6101 Rossdorf 1 (DE); Schork, Kurt, D-6100 Darmstadt (DE)
(74) Vertreter: Werner, Hans-Karsten, Dr.Dipl.-Chem.

(56) Entgegenhaltungen:
- EP-A- 0 166 824
- WORLD PATENTS INDEX LATEST Section Ch, Week 8419, Derwent Publications Ltd., London, GB; Class A, AN 84-11741 & JP-A-59 055 174 (DAINIPPON PHARM) 30. März 1984

## Beschreibung

Gegenstand der vorliegenden Erfindung sind mit Ballaststoffen angereicherte flüssige Nahrungsmittel, welche gegenüber den bisher bekannten flüssigen Nahrungsmitteln einen deutlich höheren Gehalt an löslichen und unlöslichen Ballaststoffen enthalten, sowie Verfahren zur Herstellung derartige flüssiger Nahrungsmittel.

Ballaststoffe sind ein wichtiger Bestandteil unserer Lebensmittel. Es handelt sich um Bestandteile, die vom menschlichen Verdauungssystem nicht abgebaut werden können. Ein Teil dieser Ballaststoffe ist löslich, während die meisten Ballaststoffe unlöslich sind oder zumindest nur quellfähig. Aus chemischer Sicht gehören sie verschiedenen Stoffklassen an, nämlich Polysaccharide, Cellulosen, Hemicellulosen und Lignin. Die Ballaststoffe begünstigen im Mund den Speichelfluß und verlängern die Verweildauer der Nahrung im Magen. Besonders wichtig ist ihre Wirkung für die Darmfunktion, da sie Darmträgheit verhüten, der Verstopfung entgegenwirken und die Sekretion der Verdauungssäfte erhöhen. Der Darm kann nur dann richtig arbeiten, wenn er gut gefüllt ist. Hierzu tragen die Ballaststoffe auf verschiedene Art und Weise bei, indem sie die Darmwand mechanisch reizen und darüber hinaus in einigen Fällen lebenswichtigen Bakterien als Nahrungsquelle dienen.

Es ist bekannt, daß die Industriegesellschaft im allgemeinen zu viel ißt, zu fett ißt, zu süß ißt und zu wenig Ballaststoffe verzehrt. Pro Person und Tag werden nur etwa 15 bis 20 g Ballaststoffen aufgenommen. Die DGE (Deutsche Gesellschaft für Ernährung) empfiehlt jedoch, daß pro Tag und pro Person mindestens 30 g Ballaststoffe mit einer ausreichenden Flüssigkeitsmenge gegessen werden sollten.

Die US-A-4 834 990 beschreibt ein Getränk, bei dem lösliche oder unlösliche Ballaststoffe und eine Calciumverbindung zu Fruchtsaft gegeben werden

Es sind zwar bereits eine Reihe von festen und teigigen Nahrungsmittel entwickelt worden, die einen erhöhten Gehalt an Ballaststoffen aufweisen. Problematisch sind jedoch nach wie vor die flüssigen Nahrungsmittel, die bisher keine Ballaststoffen oder nur in Mengen bis zu circa 2 g/l enthalten. Bisherige Versuche, den Gehalt von Ballaststoffen in flüssigen Nahrungsmitteln anzureichern und durch Zusatz von löslichen und/oder unlöslichen Ballaststoffen zu erhöhen, sind daran gescheitert, daß es nicht gelungen ist, stabile Zubereitungen zu entwickeln, die obendrein die geforderten hohen sensorischen, physikalischen und chemischen Produktqualitäten aufweisen. Insbesondere die unlöslichen Ballaststoffe führen zu einer raschen Sedimentation und Ausklarung des überstandes, wobei die Sedimente oftmals durch einfaches Schütteln und Rühren nur schwer wieder suspendiert werden können. Lösliche Ballaststoffe hingegen weisen im allgemeinen die Eigenschaft auf, die Viskosität der Lösungen stark zu erhöhen oder sogar Gele zu bilden, so daß man keine flüssigen Nahrungsmittel mit höherem Ballaststoffgehalt herstellen kann.

Die Erfindung hat sich somit die Aufgabe gestellt mit Ballaststoffen angereicherte flüssige Nahrungsmittel zu entwickeln, die einen deutlich höheren Gehalt an löslichen und unlöslichen Ballaststoffen enthalten, ausreichende physikalische Stabilität und vor allen Dingen sensorische und chemische Produktqualitäten aufweisen. Unter deutlich erhöhtem Gehalt an löslichen und unlöslichen Ballaststoffen könnten prinzipiell auch schon flüssige Nahrungsmittel verstanden werden, die mehr als 5 g/l Gesamtballaststoffe aufweisen. Zusammen mit einer ballastreichen festen oder teigigen Ernährung könnte dies bereits dazu beitragen, die Zufuhr an Gesamtballaststoffen deutlich zu erhöhen. Von besonderem Interesse im Sinne der vorliegenden Erfindung sind jedoch flüssige Nahrungsmittel mit einem Gehalt von Gesamtballaststoffen von 10 bis 30 g/l vorzugsweise 15 bis 20 g/l. 1 bis 2 l derartiger flüssiger Nahrungsmittel pro Tag wären in der Lage, den Bedarf an Gesamtballaststoffen weitgehend oder sogar vollständig zu decken. Auf alle Fälle würde der Verzehr von derartigen flüssigen Nahrungsmitteln nicht mehr zu der bisher unausgeglichenen ballastarmen Ernährung führen.

Diese Aufgabe konnte jetzt erstmals gelöst werden durch flüssige Nahrungsmittel, enthaltend 10 bis 30 g/l, vorzugsweise 15 bis 20 g/l Gesamtballaststoffe, von denen mindestens 50 Gew.-% unlöslich und mindestens 10 Gew.-% löslich sind, wobei die unlöslichen Ballaststoffen überwiegend aus Faserstoffen von Früchten und/oder Gemüse stammen und die löslichen Ballaststoffe überwiegend aus Frucht- und/oder Gemüsepürees bzw. -pulpen stammen oder zugesetzt werden in Form von Pektin, Guar und Johannisbrotkernmehl oder Gemischen. aus Pektin Guar und Johannisbrotkernmehl dadurch gekennzeichnet, daß pektinhaltiger Ballaststoff aus Apfeltrester und/oder Ballaststoff aus Hülsenfrüchten enthalten sind.

Von entscheidender Bedeutung ist, daß mindestens 10 Gew.-% der Gesamtballaststoffe löslich sind und diese löslichen Ballaststoffe überwiegend aus Frucht- und/oder Gemüsepürees bzw. -pulpen stammen oder zugesetzt werden in Form von Pektin, Guar und Johannisbrotkernmehl oder Gemischen derselben. Erfindungsgemäß muß somit mindestens 10 Gew.-% der Gesamtballaststoffe löslich sein und überwiegend als Stabilisator für die unlöslichen Ballaststoffe zur Verfügung stehen. Als besonders günstig hat sich erwiesen, wenn mindestens 5 Gew.-% der Gesamtballaststoffe stabilisierende Wirkungen aufweist, wie Pektin, Guar und Johannisbrotkernmehl, die wiederum in zu hohen Mengen zugesetzt zu einer starken Viskositätserhöhung oder Gelbildung führen.

Besonders bewährt hat sich beispielsweise der Zusatz von Ballaststoff aus Hülsenfrüchten, welcher sich aus löslichen und unlöslichen Ballaststoffen zusammensetzt und in Pulverform angeboten wird. Weiterhin hat sich sehr gut bewährt ein pulverförmiger Ballaststoff aus Apfeltrester, welcher 80 bis 90 % lösliche Ballaststoffe enthält. Bei Verwendung von Ballaststoffen aus Hülsenfrüchten ist es im allgemeinen nötig, einen stabilisierenden Zusatz von Pektin, Guar und Johannisbrotkernmehl oder Gemischen derselben zuzusetzen, es sei denn, daß die verwendeten Frucht- und oder Gemüsepürees bzw. Pulpen von Natur aus einen relativ hohen Anteil derartiger Komponenten aufweisen.

Selbstverständlich ist es möglich, den erfindungsgemäßen flüssigen Nahrungsmitteln auch einen gewissen Anteil von Ballaststoffen aus Cerealien zuzusetzen. Besonders bewährt haben sich Ballaststoffe aus milchsauer vergorenen Cerealien, da sie obendrein meist eine gewisse Menge der ernährungsphysiologisch erwünschten Milchsäure als Genußsäure mitliefern.

Selbstverständlich enthalten die erfindungsgemäßen flüssigen Nahrungsmittel im allgemeinen auch zusätzlich Fruchtsaft- und/oder Gemüsesaftkonzentrat, Süßungsmittel und/oder Süßstoffe, Genußsäuren und Aromen. Diese Komponenten sind zur Ergänzung und Verbesserung insbesondere der sensorischen Produktqualität notwendig. Ihre Mengen werden in üblicher Weise so gewählt, daß insgesamt ein gut akzeptables und qualitativ hochwertiges Nahrungsmittel entsteht. Als Fruchtsaft- und/oder Gemüsesaftkonzentrat können prinzipiell alle schon jetzt in der Nahrungsmittelindustrie verwendeten Konzentrate verwendet werden. Im allgemeinen ist ihr Gehalt an löslichen und unlöslichen Ballaststoffen jedoch so gering, daß die allein auf ihrer Basis hergestellten flüssigen Nahrungsmittel im allgemeinen nur Gesamtballaststoffe von nicht mehr als 2 g/l aufweisen.

Als Süßungsmittel kommen alle üblichen und lebensmittelrechtlich zugelassenen Zucker, Zuckergemische, Sirupe und natürlichen Süßungskonzentrate in Frage, wie Saccharose, Glucose, Fructose, Invertzucker aber auch Traubensaftkonzentrate etc.. Als Süßstoffe kommen prinzipielle alle lebensmittelrechtlich zugelassenen Süßstoffe in Frage wie Saccharin, Cyclamat, Aspartam, Acesulfam und anderen Zuckeraustauschstoffe.

Als Genußsäuren kommen prinzipiell alle üblichen lebensmittelrechtlich zugelassenen Säuren in Frage, wie Zitronensäure, Weinsäure, Milchsäure und Apfelsäure. In vielen Fällen liefern bereits die Frucht- und Gemüsepürees bzw. Pulpen einerseits und die Fruchtsaft- oder Gemüsesaftkonzentrate andererseits einen erheblichen Anteil an Genußsäuren. Insbesondere zur Feinabstimmung des Geschmackes kann es jedoch erwünscht oder erforderlich sein, weitere Genußsäuren zuzusetzen. Dabei hat sich der Zusatz von Milchsäurekonzentrat aus milchsauer vergorenen Cerealien als besonders vorteilhaft erwiesen. Diese Milchsäurekonzentrate werden beispielsweise aus enzymatisch aufgeschlossener Getreidemaische hergestellt, die mit den Feststoffen einer Milchsäuregärung unterworfen, sterilisiert und konzentriert werden. Dieses Milchsäurekonzentrat ist Gegenstand der europäischen Patentanmeldung 89 114 172.3.

Schließlich werden den erfindungsgemäß flüssigen Nahrungsmittel im allgemeinen Aromen zugesetzt, und zwar erst nach dem Pasteurisieren, da die meisten Aromen qualitativ darunter leiden, wenn sie schon vor dem Pasteurisieren zugesetzt würden.

Selbstverständlich können den erfindungsgemäßen flüssigen Nahrungsmitteln auch zusätzlich Mineralstoffe und/oder Vitamine sowie zusätzliches Eiweiß zugesetzt werden. Art und Menge dieser Zusätze wird im allgemeinen davon abhängig gemacht, aus welchen sonstigen Komponenten das flüssige Nahrungsmittel hergestellt worden ist und welche weiteren Zusätze es zur Optimierung seiner sensorischen, physikalischen, chemischen und ernährungsphysiologischen Eigenschaften aufweisen sollte.

Diese Zusätze können je nach Anforderung und beabsichtigter Deklaration des flüssigen Nahrungsmittels natürlicher Herkunft sein oder künstlich hergestellt werden, wobei dann zumindest naturidentischen Zusätzen der Vorzug gegeben wird.

Die Herstellung der erfindungsgemäßen mit Ballaststoffen angereicherten flüssigen Nahrungsmittel erfolgt im allgemeinen dadurch, daß zunächst die flüssigen und pastösen Komponenten, insbesondere die Pürees, Pulpen, Saftkonzentrate, Sirupe mit einem Teil des Wassers vorgemischt, dann die pulverförmigen und festen Komponenten, wie pulverförmige Ballaststoffe aus Apfeltrester, Hülsenfrüchten, Pektin, Guar, Johannisbrotbaumkernmehl sowie die Faserstoffe eingearbeitet, diese Gemische vor oder nach dem Pasteurisieren homogenisiert, nach dem Pasteurisieren mit Aromen versetzt und mit Wasser auf den gewünschten Trockensubstanzgehalt eingestellt.

Ein besonderer Vorteil der erfindungsgemäßen flüssigen Nahrungsmittel besteht darin, daß nach der Herstellung zunächst nur soviel Wasser zugegeben werden muß, daß ein lager- und transportfähiges Konzentrat entsteht, welches erst später mit weiterem Wasser zum fertigen Nahrungsmittel verdünnt und in Gebinde abgefüllt werden muß. Es ist somit auch bei diesem flüssigen Nahrungsmittel möglich, lager- und transportfähige Konzentrate herzustellen, die erst beim Abfüller mit dem restlichen Wasser vermischt in Gebinde abgefüllt wird.

Bei der Herstellung ist darauf zu achten, daß insbesondere die Faserstoffe von Früchten und/oder Gemüse ausreichend zerkleinert werden, da sie besonderen Maße dazu beitragen in den in üblicher Weise gelieferten Teilchengrößen zu sedimentieren. Die feine Vermahlung kann prinzipiell bereits vor der Verarbeitung zum erfindungsgemäßen flüssigen Nahrungsmittel erfolgen. Es hat sich jedoch als einfach und völlig ausreichend erwiesen, die Gemische aus flüssigen und pastösen Komponenten einerseits und pulverförmigen Ballaststoffen andererseits so zu homogenisieren, daß dabei eine Verkleinerung der Faserstoffe stattfindet. Geeignet ist dafür beispielsweise eine in der Lebensmitteltechnologie bekannte Homogenisierung mit Drücken bis zu 250 bar. Prinzipiell ist es aber auch möglich, die Gemische auf Kolloidmühlen fein zu verteilen. Auf alle Fälle muß dafür gesorgt werden, daß in dem erfindungsgemäßen flüssigen Nahrungsmittel nicht zu viele zur starken Sedimentation neigende gröbere Faserstoffe enthalten bleiben, da offensichtlich nur die löslichen Ballaststoffe in der Lage sind, größere Mengen feinverteilter unlöslicher Ballaststoffe zu stabilisieren.

In den nachfolgenden Beispielen sind einige bevorzugte Beispiele der erfindungsgemäßen flüssigen Nahrungsmitel sowie das Verfahren zur Herstellung beschrieben.

### Beispiel 1

Für 1 l Fertiggetränk werden folgende Komponente benötigt:
- 5 g: Ballaststoff aus Apfeltrester (in Pulverform)
- 10 g: Ballaststoff aus Hülsenfrüchten (in Pulverform)
- 1 g: Stabilisator (Gemisch aus Pektin, Guar und Johannisbrotkernmehl 1:1:1)
- 70 g: Faserstoff aus Früchten (Citrusfrüchte)
- 100 g: Fruchtpüree und Pulpen (Aprikose und Mango)
- 50 g: Fruchtsaftkonzentrat (Citrusfrüchte)
- 90 g: Fructosesirup (70 prozentig)
- 20 g: milchsauer vergorenes Konzentrat von Cerealien
- 2 g: natürliches Fruchtaroma aus Citrus-, exotischen und einheimischen Früchten.

Die Fruchtpürees, Pulpen und Fruchtsaftkonzentrate, der Fructosesirup und das milchsauer vergorene Konzentrat aus Cerealien wird auf 600 g mit Wasser aufgefüllt und vermischt. Hiernach werden die Ballaststoffe aus Apfeltrester (ca. 10 % Pektin und 90 % lösliche Ballaststoffe), Ballaststoffe aus Hülsenfrüchten (enthaltend lösliche und unlösliche Ballaststoffe) und der Stabilisator mittels eines Disolvers homogen eingerührt. Nach Zugabe der Faserstoffe aus Früchten wird die Mischung mit einem Röhrentauscher auf 80°C erhitzt und wieder zurückgekühlt. Das Fruchtaroma wird erst hiernach zugesetzt. Die Homogenisierung der Mischung erfolgt bei Drücken bis 250 bar. Das homogenisierte Getränk wurde mit dem restlichen Wasser eingestellt, mittels eines Entgasers entlüftet und heiß auf Flaschen gefüllt. Nach dem Verschließen wurden die Flaschen zurückgekühlt.

Es handelt sich um ein orangenfarben trüb aussehendes Getränk mit angenehmen Geruch und Geschmack, das sich gut und angenehm trinken läßt. Der Gehalt an Gesamtballaststoffen beträgt ca. 20 g/l.

### Beispiel 2

In gleicher Weise wie in Beispiel 1 beschrieben wird ein tomatenfarbener Gemüsetrank hergestellt, für welchen folgende Bestandteile verwendet werden:
- 5 g: Ballaststoff aus Apfeltrester (in Pulverform)
- 10 g: Ballaststoff aus Hülsenfrüchten (in Pulverform)
- 1 g: Stabilisator (Gemisch aus Pektin, Guar und Johannisbrotkernmehl 1:1:1)
- 70 g: Faserstoffe aus Gemüse (überwiegend Tomate)
- 100 g: Gemüsepüree aus Tomate und Karotte
- 50 g: Gemüsesaftkonzentrat (Tomate, Paprika, Sellerie und rote Beete)
- 90 g: Fructosesirup
- 20 g: milchsauer vergorenes Konzentrat
- 2 g: natürliches Aroma aus Gemüse und Gewürzen.

Die Verarbeitung erfolgte in gleicher Weise wie in Beispiel 1 beschrieben. Es war ein gut aussehendes, gut schmeckendes und stabiles Getränken entstanden, das mit handelsüblichen flüssigen Nahrungsmitteln durchaus vergleichbar ist, jedoch einen ca. siebenfachen Gehalt an Ballaststoffen enthält.

### Beispiel 3

Aus den gleichen Bestandteilen wie im Beispiel 1 wurde ein Gemisch aus Fruchtpüree, Pulpen und Fruchtsaftkonzentrat, Fructosesirup und milchsauer vergorenem Konzentrat aus Cerealien, 50 % des zur Verfügung stehenden Wassers hergestellt, anschließend wurden die pulverförmigen Bestandteile, nämlich Ballaststoffe aus Apfeltrester und Hülsenfrüchten sowie Stabilisator mittels eines Disolvers fein verteilt eingebracht. Nach Zugabe der Faserstoffe aus Citrusfrüchten wurde die Mischung mit einem Plattenwärmetauscher bei 85°C pasteurisiert und zurückgekühlt. Nach Zugabe des Aromas erfolgte die Homogenisierung mit Drücken bis 250 bar. Nach Zugabe der restlichen Menge Wasser wird der Grundstoff mit einem Röhrenaustauscher aseptisch auf entsprechende Gebinde gefüllt. Das erhaltene Getränk entsprach völlig dem des Beispiels 1.

## Patentansprüche

1. Mit Ballaststoffen angereicherte flüssige Nahrungsmittel enthaltend 10 bis 30 g/l, Gesamtballaststoffe, von denen mindestens 50 Gew.-% unlöslich und mindestens 10 Gew.-% löslich sind, wobei die unlöslichen Ballaststoffe überwiegend aus Faserstoffen von Früchten und/oder Gemüse stammen und die löslichen Ballaststoffe überwiegend aus Frucht- und/oder Gemüsepürees bzw. -pulpen stammen oder zugesetzt werden in Form von Pektin, Guar und Johannisbrotkernmehl oder Gemischen aus Pektin Guar und Johannisbrotkernmehl dadurch gekennzeichnet, daß pektinhaltiger Ballaststoff aus Apfeltrester und/oder Ballaststoff aus Hülsenfrüchten enthalten ist.

2. Flüssiges Nahrungsmittel gemäß Anspruch 1, enthaltend 15 bis 20g/l Gesamtballaststoffe.

3. Flüssige Nahrungsmittel gemäß Ansprüchen 1 oder 2, bei denen ein Teil der Ballaststoffe aus Cerealien stammt.

4. Flüssige Nahrungsmittel gemäß Anspruch 3, bei denen ein Teil der Ballaststoffe aus milchsauer vergorenen Cerealien stammt.

5. Flüssige Nahrungsmittel gemäß einem der Ansprüche 1 bis 4, enthaltend zusätzlich Fruchtsaft- und/oder Gemüsesaftkonzentrat, Süßungsmittel und/oder Süßstoffe, Genußsäuren und Aromen.

6. Flüssige Nahrungsmittel gemäß einem der Ansprüche 1 bis 5, enthaltend zusätzliche Mineralstoffe und/oder Vitamine.

7. Flüssige Nahrungsmittel gemäß einem der Ansprüche 1 bis 6, enthaltend zusätzliches Eiweiß.

8. Verfahren zur Herstellung von mit Ballaststoffen angereicherten flüssigen Nahrungsmitteln gemäß Ansprüchen 1 bis 7, dadurch gekennzeichnet, daß zunächst die flüssigen und pastösen Komponenten, insbesondere die Pürees, Pulpen, Saftkonzentrate, Sirupe mit einem Teil des Wassers vorgemischt, dann die pulverförmigen und festen Komponenten, wie pulverförmige Ballaststoffe aus Apfeltrester, Hülsenfrüchten, Pektin, Guar, Johannisbrotkernmehl sowie die Faserstoffe zugemischt, diese Gemische vor oder nach dem Pasteurisieren homogenisiert, nach dem Pasteurisieren mit Aromen versetzt und mit weiterem Wasser versetzt werden.

9. Verfahren gemäß Anspruch 8, dadurch gekennzeichnet, daß zunächst nur soviel Wasser zugegeben wird, daß ein lager- und transportfähiges Konzentrat entsteht und dieses erst später mit weiterem Wasser zum fertigen Nahrungsmittel verdünnt und in Gebinde abgefüllt wird.

## Claims

1. Bulked liquid foodstuffs containing from 10 to 30 g/l overall bulk materials, at least 50% by weight of which are insoluble and at least 10% by weight are soluble, the insoluble bulk materials being derived predominantly from fruit and/or vegetable fibrous materials, and the soluble bulk materials being derived predominantly from fruit and/or vegetable purees or pulps, or are added in the form of pectin, guar and flour of locust bean seeds or mixtures of pectin, guar and flour of locust bean seeds, characterized in that pectin-containing bulk material from apple marc and/or bulk material from leguminous plants is contained therein.

2. Liquid foodstuffs according to claim 1, containing from 15 to 20 g/l overall bulk materials.

3. Liquid foodstuffs according to claims 1 or 2, wherein part of the bulk materials are derived from cereals.

4. Liquid foodstuffs according to claim 3, wherein part of the bulk materials are derived from lactic-fermented cereals.

5. Liquid foodstuffs according to one of claims 1 to 4, additionally containing fruit juice and/or vegetable juice concentrate, sweetening agents an/or sweeteners, edible acids and flavours.

6. Liquid foodstuffs according to one of claims 1 to 5, additionally containing minerals and/or vitamins.

7. Liquid foodstuffs according to one of claims 1 to 6, containing additional protein.

8. A process for preparing bulked liquid food-stuffs according to claims 1 to 7, characterized in that initially the liquid and pasty components, in particular the purees, pulps, juice concentrates, syrups are premixuied with part of the water, then the powdery and solid components such as powdery bulk materials from apple marc, leguminous plants, pectin, guar, flour of locust bean seeds and fibrous materials are admixed, these mixtures are homogenized prior or subsequent to pasteurizing, and following pasteurizing flavours are added and additional water is added.

9. The process according to claim 8, characterized in that initially, water is added just in such amount that a concentrate fit for storage and shipping is formed which not until later is diluted with additional water to give the final foodstuff and is filled into containers.

## Revendications

1. Aliments liquides enrichis en matières inertes, contenant en tout de 10 à 30 g/l de matières inertes, dont au moins 50 % en poids sont insolubles et au moins 10% en poids sont solubles, les matières inertes insolubles provenant essentiellement de matières fibreuses de fruits et/ou de légumes, et les matières inertes solubles provenant essentiellement de purées et/ou pulpes de fruits et/ou de légumes ou sont ajoutées sous forme de pectine, de guar et de farine de caroube, ou de mélanges de pectine, de guar et de farine de caroube, caractérisés en ce qu'ils contiennent une matière inerte contenant de la pectine, provenant du marc de pommes, et/ou une matière inerte provenant de légumineuses.

2. Aliments liquides selon la revendication 1, contenant en tout de 15 à 20 g/l de matières inertes.

3. Aliments liquides selon la revendication 1 ou 2, dans lesquels une partie des matières inertes provient de céréales.

4. Aliments liquides selon la revendication 3, dans lesquels une partie des matières inertes provient de céréales ayant subi une fermentation lactique.

5. Aliments liquides selon l'une des revendications 1 à 4, contenant, en outre, un concentré de jus de fruits et/ou un concentré de jus de légumes, un édulcorant et/ou de la saccharine, des acides alimentaires et des arômes.

6. Aliments liquides selon l'une des revendications 1 à 5, contenant, en outre, des minéraux et/ou des vitamines.

7. Aliments liquides selon l'une des revendications 1 à 6, contenant une quantité supplémentaire d'albumine.

8. Procédé de préparation d'aliments liquides enrichis en matières inertes selon les revendications 1 à 7, caractérisé en ce qu'on mélange préalablement les composants liquides et pâteux, notamment les purées, les pulpes, les concentrés de jus et les sirops, avec une partie de l'eau, ensuite on ajoute les composants pulvérulents et solides, comme des matières inertes pulvérulentes provenant du marc de pommes, de légumineuses, de la pectine, du guar et de la farine de caroube, ainsi que les matières fibreuses, on homogénéise ces mélanges avant ou après la pasteurisation, et, après la pasteurisation, on ajoute des arômes et une quantité supplémentaire d'eau.

9. Procédé selon la revendication 8, caractérisé en ce qu'on ajoute de l'eau d'abord en une quantité juste suffisante -- pour obtenir un concentré apte au stockage et au transport, et ce n'est qu'ensuite qu'on dilue ce concentré avec une quantité supplémentaire d'eau pour obtenir l'aliment fini que l'on conditionne dans des conteneurs.
